(19) Europäisches Patentamt / European Patent Office / Office européen des brevets

(11) **EP 1 851 568 B1**

(12) **FASCICULE DE BREVET EUROPEEN**

(45) Date de publication et mention de la délivrance du brevet:
**25.05.2016 Bulletin 2016/21**

(21) Numéro de dépôt: **06707834.5**

(22) Date de dépôt: **25.01.2006**

(51) Int Cl.:
*G01S 13/00* (2006.01)    *G01S 7/292* (2006.01)
*G01S 13/18* (2006.01)    *G01S 13/532* (2006.01)
*G01S 13/58* (2006.01)

(86) Numéro de dépôt international:
**PCT/EP2006/050431**

(87) Numéro de publication internationale:
**WO 2006/087257 (24.08.2006 Gazette 2006/34)**

(54) **PROCEDE DE DETECTION EN MODE BI-STATIQUE PAR EXPLOITATION PASSIVE D'EMISSIONS RADIOELECTRIQUES NON COOPERANTES**

VERFAHREN ZUR BISTATISCHEN DETEKTION MITTELS PASSIVER AUSWERTUNG NICHT KOOPERIERENDER RADIOELEKTRISCHER SENDUNGEN

METHOD FOR DETECTING IN BISTATIC MODE BY PASSIVELY OPERATING ON NON-CO-OPERATING RADIOELECTRIC TRANSMISSIONS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.02.2005 FR 0501695**

(43) Date de publication de la demande:
**07.11.2007 Bulletin 2007/45**

(73) Titulaire: **THALES**
**92200 Neuilly sur Seine (FR)**

(72) Inventeurs:
• **GREVERIE, Wilfried**
  **F-75016 Paris (FR)**
• **HARDANGE, Jean-phillippe**
  **F-91190 Gif Sur Yvette (FR)**
• **MULLER, Daniel**
  **F-92100 Boulogne (FR)**
• **OLIVIER, Bernard**
  **F-78140 Velizy (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A- 2 776 438      US-A- 5 760 743
US-A1- 2003 020 653     US-A1- 2004 075 605

**Description**

L'invention se rapporte aux systèmes de détection radioélectriques, exploitant des émissions non coopérantes pour détecter et localiser des cibles. Ces émissions non coopérantes sont par exemple des émissions destinées à la radio diffusion, telles que les émissions radio FM. L'invention se rapporte en particulier aux radars passifs bi-statiques fonctionnant dans les bandes UHF ou VHF.

La localisation passive de cibles mobiles par exploitation des réflexions sur une cible d'une émission non coopérative suit un principe connu basé sur un fonctionnement bistatique du dispositif de localisation. Ce mode de fonctionnement bistatique suppose en particulier l'exploitation d'au moins deux voies de réception, une voie, dite voie de référence, recevant le signal émis par la source non coopérative selon un trajet direct, et une voie cible, destinée à la réception des échos réfléchis par des éléments situés dans l'espace couvert par la source émettrice.

La localisation passive en mode bi-statique se trouve facilitée si l'on connaît la position de la source émettrice. C'est pourquoi ces systèmes utilisent généralement des infrastructures d'émissions civiles destinées par exemple à la radio diffusion nationale ou régionale, telles que les émissions radio FM à destination du grand public. Ces infrastructures présentent en outre généralement l'avantage de couvrir de manière uniforme un vaste territoire avec des installations fixes. De manière connue, les techniques de localisation passive de cibles mobiles par exploitation des réflexions sur ces cibles d'une émission non coopérative à spectre "aléatoire" telles que par exemple les émissions FM, mettent généralement en oeuvre les opérations suivantes:

- Le calcul de la fonction d'intercorrélation entre le signal de référence issus du trajet direct de l'onde émise vers le récepteur, et le signal reçu par le système de localisation après réflexion par la cible. Pour ce faire, le signal de référence subit successivement une série de décalages correspondant à des hypothèses de décalage temporel et fréquentiel du signal correspondant à des hypothèses sur la position et la vitesse de la cible ayant réfléchi le signal émis par la source.

- La détection des "pics" d'intercorrélation, cette détection étant par exemple réalisée par comparaison à un seuil.

- L'estimation de distance bistatique et de vitesse Doppler par extraction de la position des pics détectés.

On rappelle ici que la distance bistatique est une distance permettant de situer la cible ayant réfléchi le signal émis sur un ellipsoïde centrée sur la source émettrice et le système de détection.

La mise en oeuvre de ces techniques connues de l'art antérieur pose cependant certaines limitations, liées en particulier à la nature des émissions exploitées. Les caractéristiques du type de signal émis ont en effet une influence déterminante sur les performances de détection que l'on peut espérer du système passif qui exploite le signal non coopérant émis.

Dans le cas particulier des émissions de radio diffusion en FM, il faut tenir compte en particulier de la décomposition de la bande FM totale, qui s'étend typiquement de 87.5 MHz à 108 MHz, en un certain nombre de canaux indépendants, chaque canal ayant ainsi une bande de fréquence limitée, de l'ordre de 200 kHz par exemple. L'exploitation d'un canal d'émission limite donc la bande d'analyse du signal reçu à quelques centaines de kilohertz.

Dans le cas d'une émission FM, il faut également prendre en compte la diversité des informations transmises qui constituent le signal modulant la porteuse. Ces informations vont de la simple parole à des informations numériques éventuellement codées et multiplexées. Le type de signal modulant conditionne directement la largeur du spectre du signal émis à l'intérieur d'un même canal. Ainsi le signal émis peut occuper une bande de fréquence variant de quelques centaines de Hertz à la totalité de la bande allouée au canal (typiquement 200kHz), par exemple, au canal.

En ce qui concerne les systèmes de localisation électromagnétiques, il est connu que la résolution distance est conditionnée par la largeur du spectre du signal exploité. Ainsi, dans le cas de systèmes passifs utilisant des émissions FM non coopérantes émises sur un canal donné, la résolution en distance se trouve limitée à plusieurs centaines de mètres, compte tenu de la largeur maximale du canal FM (100 kHz typiquement).

En outre, il est également connu que le contraste entre 2 cibles ou entre une cible et le fouillis ambiant est limité par le produit BT de la bande passante B du signal par le temps d'intégration T de la mesure effectuée sur le signal. En tenant compte de la bande passante du signal exploité, qui est limitée par la largeur du canal et de la durée maximale d'observation, déterminée par les caractéristiques dynamiques du type de cible recherché, on constate que cette dynamique est réduite à une valeur de l'ordre de 40 à 50 décibels. Cette valeur limite considérablement la dynamique des cibles détectables, en terme de surface équivalente radar ou SER et de portée de détection, et peut induire des contraintes fortes sur la disposition géométrique relative de l'émetteur et du récepteur.

La limitation de la bande passante du signal émis par des sources non coopérantes du type des stations de radio diffusion en FM constitue donc une limitation à la mise en oeuvre de systèmes de détection passifs exploitant la bande FM.

Un document FR 2 776 438 divulgue un système de détection de mobiles, utilisant les émissions de télédiffusion numérique d'un réseau d'émetteurs terrestres.

Un but de l'invention est de pallier les inconvénients précités, notamment en ce qui concerne les limitations affectant les performances, en particulier en terme de SER et de portée, des systèmes de détection passifs exploitant des émissions non coopératives. A cet effet, l'invention a pour objet un procédé de détection pour systèmes de localisation passifs, exploitant en mode bistatique les émissions provenant de sources non coopératives émettant simultanément sur plusieurs canaux fréquentiels distincts.

Selon l'invention, le procédé comporte au moins les étapes suivantes:

- une étape de réception pour chaque canal exploité du signal de référence provenant de la source émettrice selon un trajet direct, et du signal rétrodiffusé par les différents objets présents dans l'espace couvert,
- une étape de filtrage permettant la séparation et la sélection des canaux fréquentiel exploités,
- une étape d'analyse canal par canal du signal reçu dans chaque canal qui permet de définir un ensemble de cellules d'analyse, chaque cellule correspondant à un domaine distance bistatique - vitesse doppler, $(\Delta d, \Delta v_d)$, autour d'un point défini par couple de valeurs (distance bistatique, vitesse doppler) donné, cellule à laquelle est associée la mesure du signal reçu pour cette cellule,
- une étape d'intégration cohérente du signal reçu, cette intégration étant réalisée de canal à canal pour chacune des cellules définies,
- une étape de détection par comparaison à un seuil du niveau de signal reçu pour chaque cellule.

Selon l'invention, les étapes précédentes peuvent être avantageusement complétées par une étape de gestion d'ambiguïté permettant de supprimer, les lobes secondaires en distance du signal correspondant à un objet détecté.

Le procédé selon l'invention présente l'avantage d'augmenter la dynamique de détection des signaux reçus.

L'intégration des différents canaux exploités par la source émettrice permet également d'améliorer le rapport signal à bruit ou signal à fouillis et de rendre la qualité de la localisation effectuée peu sensible aux variations de bande passante des signaux reçus dans chaque canal, variation consécutive à un changement de nature du signal modulant à des instants non maîtrisés, dans un ou plusieurs canaux exploités. Cette intégration permet également d'améliorer la résolution en distance du procédé.

L'étape de gestion d'ambiguïté permet ainsi avantageusement de supprimer les détections erronées ne correspondant pas à la position réelle de la cible.

Selon une variante de mise en oeuvre correspondant à un système utilisant une antenne multivoie du type FFC par exemple, le procédé comporte également une étape de focalisation du signal reçu par les différentes voies de réception de l'antenne. Avantageusement, la focalisation peut être réalisée avant ou après la corrélation distance-doppler.

Selon une autre variante de mise en oeuvre, l'étape de détection est réalisée séparément pour chaque canal avant l'étape d'intégration cohérente.

D'autres caractéristiques et avantages apparaîtront clairement au cours de la description qui suit, description faite en regard des figures annexées qui représentent:

- la figure 1, une illustration du principe de détection radioélectrique passive en mode bistatique,
- la figure 2, une illustration des étapes de fonctionnement du procédé selon l'invention,
- la figure 3, une illustration de l'étape d'intégration cohérente selon l'invention,
- la figure 4, une illustration du résultat obtenu par la mise en oeuvre de l'étape de levée d'ambiguïté selon l'invention
- la figure 5, une illustration de l'étape de levée d'ambiguïté selon l'invention
- la figure 6, une illustration d'une variante de mise en oeuvre du procédé selon l'invention.

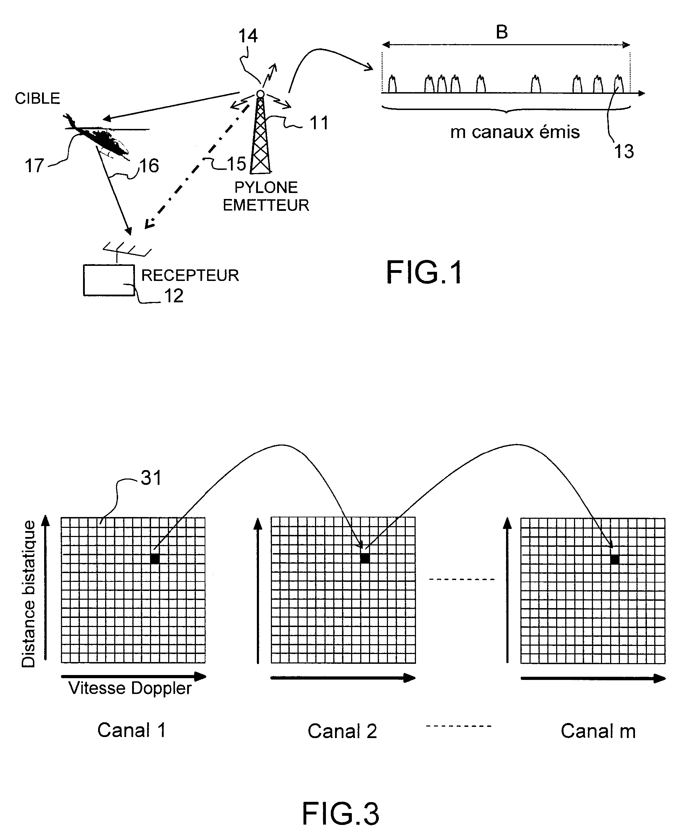

Comme l'illustre la figure 1, la détection passive en mode bistatique met en jeu deux entités distinctes, la source émettrice 11 d'une part et le système de détection et de localisation 12 d'autre part.

La source émettrice 11 est considérée comme non coopérante en ce qu'elle émet des signaux dont la destination et la nature n'est pas liée à l'usage qu'en fait le système de détection. Ce sont par exemple, comme il a été dit précédemment, des signaux de radio diffusion en bande FM destinés à la diffusion d'émissions grand publique. Ce peut également être des signaux de diffusion UHF ou VHF de type télévision par exemple ou bien encore toute autre émission à usage général. Il est de même possible d'envisager que la source 11 est en réalité une pluralité de sources, chaque source émettant sur un ou plusieurs canaux.

Dans la suite du document le cas d'exploitation d'une émission dans la bande FM sera pris comme exemple non limitatif d'application du procédé selon l'invention.

Une caractéristique de ces émissions non coopérante est qu'elles sont généralement réalisées dans une bande de fréquences définie et décomposée en sous bandes disjointes encore appelées canaux. Pour une région géographique donnée, chaque canal est alloué à une utilisation particulière, correspondant à un type d'émission donné. Par exemple, dans le cas d'une source destiné à la diffusion d'émissions FM, la bande de fréquence B sur laquelle la source est susceptible d'émettre s'étend de 87.5 MHz à 108 MHz et est décomposée en canaux 13 d'une largeur de l'ordre de 100 kHz. A l'intérieur de la bande B tout ou partie des canaux peut être exploitée.

Chaque canal exploité peut en outre être destiné à un ou plusieurs usage tels que la diffusion d'émissions parlées, de musique, d'images ou encore de données numériques multiplexées.

Ainsi la bande passante du signal FM émis sur chacun des canaux 13 est indépendante de celle des signaux émis sur les autres canaux et peut varier au cours du temps en fonction du signal ou de l'information diffusée. Par cette raison la source émettrice 11 est qualifiée de non coopérante et d'aléatoire.

Le système de détection 12 met à profit cette source émettrice en mettant en oeuvre un procédé de détection bistatique qui consiste à effectuer séparément la réception directe du signal 14 émis par la source 11, et la réception des ondes réfléchies par les différents objets présents dans la zone couverte par le système de détection 12. De manière générale, pour des raisons de simplicité de mise en oeuvre, cette réception est limitée à un seul des canaux émis par la source. En effet les signaux émis sur les différents canaux ne sont pas nécessairement synchrones les uns des autres et leur exploitation simultanée nécessite de disposer d'un traitement adapté.

Le signal 15 directement reçu de la source émettrice, est utilisé comme référence par le système de détection 12 pour déterminer l'écart temporel que présente, par rapport à cette référence, le signal 16 rétrodiffusé vers le système par un objet 17. Cet écart permet après traitement de déterminer la distance de l'objet, la vitesse de l'objet 17 étant déterminée par ailleurs, de manière classique, par traitement doppler.

Selon le type de système employé, la réception séparée des deux signaux 15 et 16 peut être réalisée en utilisant une antenne de référence directive, orientée en direction de la source ou non et une antenne de mesure pointée à volonté dans une direction donnée. Dans le cas où le système de détection 12 est équipé d'une antenne multifaisceaux, de type antenne à formation de faisceaux par le calcul par exemple( FFC) par exemple, la réception séparée du signal de référence et du signal de mesure peuvent être prise en charge par la même antenne en formant des voies de réception dans les directions adéquates.

A la différence des systèmes de détections passifs fonctionnant dans la bande FM et connus de l'art antérieur, les systèmes 12 mettant en oeuvre le procédé selon l'invention sont avantageusement en mesure d'exploiter les signaux émis par la source émettrice 11 simultanément sur les différents canaux utilisés.

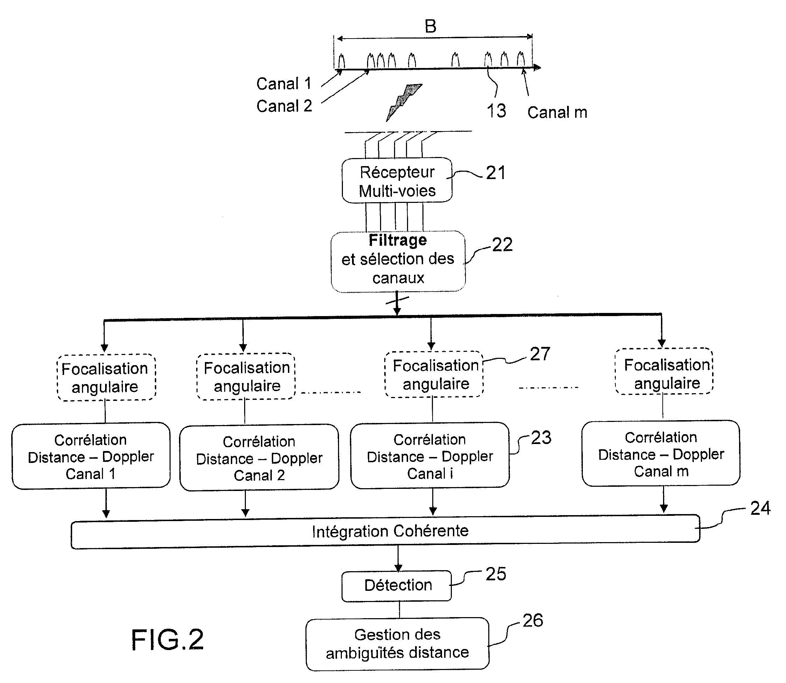

La figure 2 présente une illustration des principales étapes du procédé selon l'invention.

Comme l'illustre la figure le procédé de détection selon l'invention est appliqué sur les signaux issus du récepteur 21 équipant le système de détection et de localisation 12. Comme il a été dit précédemment selon l'architecture du système 12, le récepteur 21 peut consister en un ensemble de deux récepteurs dont l'un est associé à l'antenne de référence et l'autre à l'antenne de mesure. Il peut également s'agir, comme dans l'exemple illustré par la figure 2, d'un récepteur multivoies associée à une antenne multifaisceaux. Le signal reçu par le système de détection 12 est composé de l'ensemble des signaux issus, directement ou après rétrodiffusion, des signaux émis par la source 11 sur chacun des m canaux 13, exploités dans la bande FM totale B.

Le procédé selon l'invention comporte une étape 22 de filtrage du signal reçu. Cette opération de filtrage a principalement pour objet de séparer par canal les signaux reçus. A cet effet l'étape 22 consiste à mettre en oeuvre des filtres passe-bande sélectifs, dont la bande passante est de l'ordre de 200kHz, taille de la bande allouée à un canal FM. Le filtrage passe bande peut être réalisé de diverses façons connues par ailleurs et non détaillées dans ce document. Dans le cas d'un récepteur multivoies, l'opération 22 est réalisée pour chacune des voies de réception.

Dans le cas où le procédé selon l'invention est mis en oeuvre sur un système comportant une antenne de réception multifaisceaux, l'étape de filtrage 22 est associée à une étape classique de focalisation 27.

Le procédé selon l'invention comporte également une étape 23 consistant à réaliser pour chaque canal, une opération de corrélation Distance-Doppler du signal reçu dans la direction de mesure considérée avec le signal de référence correspondant au même canal. Le traitement réalisé durant cette étape consiste à effectuer, de manière classique, des opérations de corrélation du signal reçu avec des copies altérées du signal de référence, les altérations consistant à affecter le signal de référence d'un décalage temporel et d'un décalage fréquentiel variables. L'opération de corrélation du signal de mesure $Sc_{(i,\theta)}(t)$ avec une copie du signal de référence $S_{(i, \text{voie référence})}(t)$ présentant un décalage temporel $\tau$ et un décalage fréquentiel f, peut être décrite de manière connue par la relation suivante:

$$\chi_{(i, \theta)}(\tau, f) = \int_T Sc_{(i, \theta)}(t) \cdot S^*_{(i, \text{voie référence})}(t - \tau) \cdot e^{j2\pi ft} \cdot dt \qquad [1]$$

où i représente le numéro du canal FM considéré et $\theta$ la direction de la voie analysée (cas d'un système comportant une antenne multifaisceaux).

T représente quant à lui le temps d'intégration de la mesure. Ce temps est généralement fonction du temps pendant lequel il est possible de considérer que la mesure n'est pas faussée par le mouvement des objets se trouvant dans

EP 1 851 568 B1

l'espace couvert.

Dans le cas particulier où le système de détection et de localisation 12 est équipé d'une antenne monofaisceau classique, la relation précédente devient:

$$\chi_i(\tau,f) = \int_T Sc_i(t) \cdot S^*_{(i,\,\text{voie référence})}(t-\tau) \cdot e^{j2\pi ft} \cdot dt \qquad [2]$$

Cette opération de corrélation est généralement réalisée pour des valeurs échantillonnées de $\tau$ et de f, $\tau$ variant de $\tau = 0$ à une valeur $\tau = \tau_{max}$ par pas $\Delta\tau$ et f variant de $-f_{max}$ à $+f_{max}$ par pas $\Delta f$.
Les valeurs $\tau_{max}$ et $f_{max}$ sont définies à partir des caractéristiques de portée souhaitée et de vitesse doppler des objets que l'on souhaite détecter. Les valeurs de $\Delta\tau$ et de $\Delta f$ sont quant à elles déterminées par les limites de précision que l'on peut obtenir compte tenu de la bande passante allouée à un canal et du temps d'observation T dont on peut disposer. Ainsi, la valeur minimale de $\Delta\tau$ est bornée par l'inverse $1/\Delta f$ de la bande $\Delta F$ allouée à chaque canal i, tandis que, typiquement, la valeur minimale de $\Delta f$ est bornée par l'inverse $1/T$ du temps d'observation.

La mise en oeuvre de l'opération décrite par les formules [1] et [2] permet de déterminer pour un signal reçu a un instant donné les valeurs du retard $\tau$ et du décalage en fréquence f pour lesquelles on obtient un pic de corrélation entre le signal de mesure et le signal de référence retardé. Un pic de corrélation est obtenu lorsqu'un objet 17 situé à une distance donnée du système de détection 12 et se déplaçant à une vitesse donnée vd, réfléchit vers le système l'onde émise par la source 11.
Le retard $\tau$ permet en outre de déterminer directement la distance bistatique d correspondante, cette distance bistatique permettant de localiser l'objet 17 considéré sur un ellipsoïde ayant pour foyers la source émettrice 11 et le système de détection 12. La localisation de la position réelle de l'objet 17 est elle-même obtenue en connaissant la direction pointée par la voie de réception ou l'antenne de mesure.

La valeur f du décalage en fréquence pour laquelle on obtient un pic de corrélation correspond à la fréquence doppler du signal réfléchi par l'objet 17 et est directement liée à la vitesse doppler Vd de l'objet 17, par rapport au système de détection 12.
Les modules $|\chi_{(i,\theta)}(\tau,f)|^2$ ou $|\chi_i(\tau,f)|^2$ des fonctions $\chi_{(i,\theta)}(\tau,f)$ ou $\chi_i(\tau,f)$ sont représentatifs des fonctions d'ambiguïté de chacun des canaux, respectivement pour la direction $\theta$ dans le cas d'un système comportant une antenne à formation de voies ou pour la voie de mesure dans le cas d'une antenne monofaisceau. Cette fonction d'ambiguïté définit la taille de la cellule élémentaire d'analyse ($\Delta d$, $\Delta V_d$) du signal obtenu par corrélation distance - doppler.

L'étape de corrélation doppler-distance permet avantageusement d'établir pour chacun des canaux d'émission 13, une représentation à deux dimensions de l'analyse des décalages subis par le signal rétro-diffusé. Cette représentation dans un plan est constituée de cellules d'analyse juxtaposées selon un axe représentant les valeurs $\tau$ de décalage temporel et un axe représentant les valeurs f de décalage fréquentiel, chaque cellule ayant pour dimension $\Delta\tau\cdot\Delta f$ (ou $\Delta d\cdot\Delta v_d$). Comme l'illustre la figure 3, cette représentation ou "panorama" revêt consiste en un ensemble de cases 31 correspondant chacune à une cellule d'analyse du signal reçu par corrélation avec une copie du signal émis. A chaque cellule est associé le résultat de l'opération de corrélation correspondante. Ce type de représentation, de style cartographique, présente l'avantage de faciliter l'association des résultats obtenus simultanément pour différents canaux.

Le traitement réalisé à l'étape 23 a pour but général d'établir une cartographie distance-doppler du signal reçu sur la voie de mesure. Il est présenté ici, à titre d'exemple de réalisation non limitatif, comme un traitement par corrélation du signal réfléchi avec un signal de référence. Dans le cadre de l'invention, d'autres méthodes permettant d'obtenir cette cartographie sont, bien entendu, envisageables.

Comme l'illustre la figure 3, la cartographie distance-doppler objet de l'étape 23 cartographie permet de localiser le signal reçu à un instant donné dans une cellule distance bistatique-vitesse doppler déterminée, correspondant aux fonctions d'ambiguïté $|\chi_{(i,\theta)}(\tau,f)|^2$ ou $|\chi_i(\tau,f)|^2$. Par suite, pour augmenter le contraste et améliorer la résolution distance le procédé selon l'invention comporte une étape supplémentaire 24 d'intégration cohérente, de canal à canal, du signal obtenu dans chacune des cellules d'analyse 31.
Selon l'invention, le traitement effectué durant l'étape 24 consiste par exemple à calculer pour les valeurs de l comprises entre 0 et m-1 la valeur du signal X$_m$ décrit par la relation suivante:

$$X_l = \frac{1}{m}\sum_{i=1}^{m}\chi_{i,\theta}(\tau,v_d) \cdot e^{j2\pi\frac{f_i}{F_s}\cdot\frac{1}{m}} + \varphi_i \qquad [3]$$

Dans la relation [3], $f_i$ représente la fréquence du canal i considéré et $F_s$ la fréquence d'échantillonnage du signal reçu. La variable $V_d$ représente la vitesse doppler de la cible, c'est à dire de l'objet ayant rétrodiffusé le signal émis par la source.

L'opération d'intégration 24, décrite par la relation [3] revient donc à effectuer pour chaque couple de valeurs $(\tau, V_d)$, l'intégration du signal traité sur m échantillons cohérents, issus de m canaux, afin d'augmenter le contraste et la résolution distance.

Le terme $\varphi_i$ est un terme correctif de phase permettant quant à lui d'assurer la cohérence d'émetteur à émetteur entre les signaux issus des différents canaux. Les valeurs $\varphi_i$ sont obtenues par une optimisation du rapport signal sur bruit en sortie du traitement. Cette optimisation est basée sur un algorithme de type "moindres carrés"

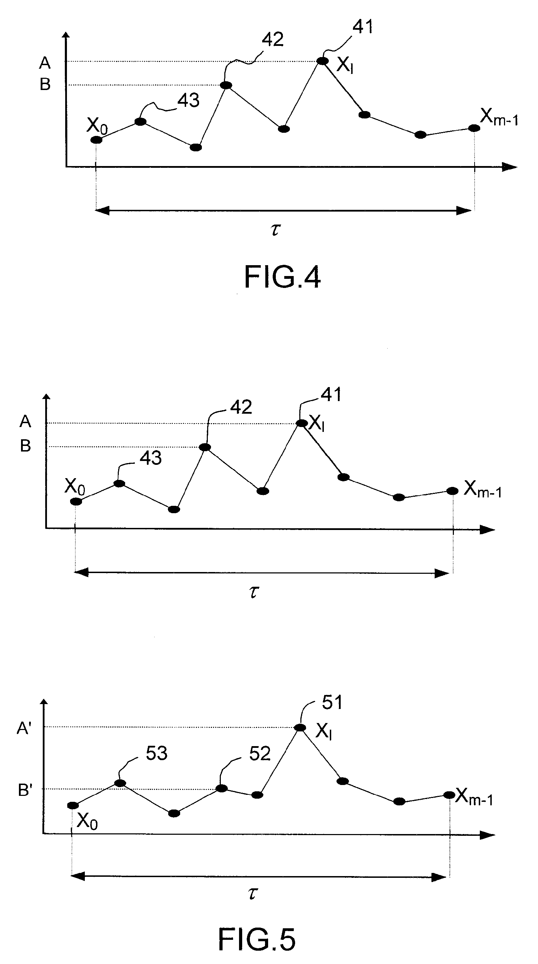

A l'issue de l'étape 24 le signal présent dans une cellule d'analyse $(\tau, v_d)$ est donc constitué comme l'illustre la figure 4 d'une suite de m d'échantillons distance faisant apparaître un pic principal 41 et des pics secondaires 42-43 répartis sur la durée $\Delta\tau$ équivalent à l'intervalle de distance bistatique $\Delta d$ d'une cellule d'analyse $(\Delta d, \Delta v_d)$. La position du pic principal 41 permet ainsi avantageusement de déterminer la position fine de la cible présente dans la cellule d'analyse considérée.

L'étape d'intégration 24 est suivie de manière classique d'une étape de détection 25. Cette étape a pour objet de déterminer pour chaque cellule d'analyse si le signal associé à cette cellule présente une amplitude suffisante pour correspondre à une cible d'intérêt. De manière connue cette étape consiste généralement à comparer à un seuil le niveau du signal associé à la cellule considérée. Dans le cadre du procédé selon l'invention, l'intégration des signaux issu des différents canaux exploités permet avantageusement de bénéficier d'un gain d'intégration qui facilite cette étape de détection.

Suivant les caractéristiques de la cible et la fréquence des canaux considérés, on obtiendra après intégration, pour une cible détectée dans une cellule d'analyse donnée, un signal présentant un pic principal 41 d'amplitude A donnée et des pics secondaires dont l'amplitude peut être soit faible devant A soit très proche A et être alors susceptible d'engendrer une ambiguïté sur la position de la cible entre la position correspondant au pic principal et celle correspondant au pic secondaire.

Dans ce dernier cas, il est difficile de lever l'ambiguïté par des méthodes simples telles que la comparaison des différents pics par rapport à un seuil de détection. C'est pourquoi le procédé selon l'invention illustré par la figure 2 peut comporter, outre une étape classique de détection 25 par un estimateur de type TFAC (traitement à taux de fausse alarme constant) par exemple, une étape complémentaire 26 de levée d'ambiguïté distance. Cette étape complémentaire est illustrée par la figure 5.

Après détection, la réponse en distance peut faire apparaître des lobes secondaires 42 de fort niveau en fonction de la répartition fréquentielle des m canaux exploités. Pour éliminer ces lobes secondaires, on effectue à l'étape 26 un traitement consistant à choisir plusieurs combinaisons de n canaux parmi les m canaux disponibles et à mettre en oeuvre le traitement cohérent de l'étape 24 sur les cellules distance-doppler où des cibles ont été détectées.

Pour chaque cellule d'analyse considérée, le traitement de l'étape 24 est alors appliqué à l'étape 26 en utilisant m échantillons parmi lesquels se trouvent les échantillons correspondant au n canaux choisis, les échantillons correspondants aux canaux non exploités étant remplacés par des valeurs arbitraires, nulles par exemple. On peut ainsi appliquer le traitement de l'étape 24 à des combinaisons différentes de n canaux.

Cet emploi de combinaisons différentes de n canaux parmi m présente avantageusement l'intérêt, comme l'illustre la figure 5, de faire varier l'amplitude des pics secondaires 52-53 en fonction des n canaux sélectionnés, le pic principal restant toujours le pic d'amplitude maximale. Ainsi par comparaison des résultats obtenus durant les étapes 24 et 26, il est possible de déterminer la position du pic principal et par-là même celle de la cible, tout en éliminant les lobes secondaires.

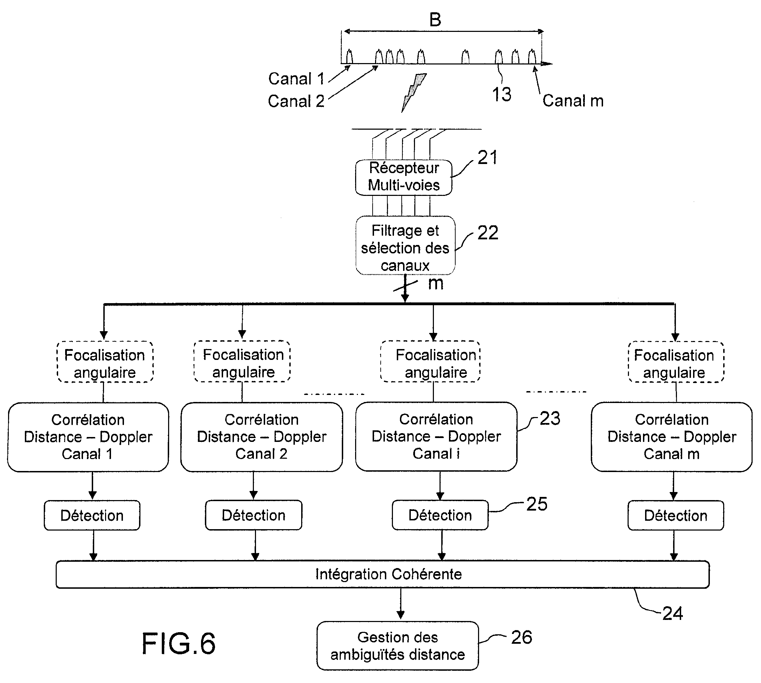

Le procédé illustré par la figure 3, constitue une forme particulière de mise en oeuvre du procédé selon l'invention présentée à titre d'illustration. Cette forme de mise en oeuvre n'est, bien entendu, pas limitative et peut présenter des variantes. Une variante possible de mise en oeuvre est notamment illustrée par la figure 6. Cette variante de mise en oeuvre, dans laquelle l'étape de détection 25 précède l'étape d'intégration cohérente, présente l'avantage de limiter l'opération d'intégration aux seules cellules distance-doppler dans lesquelles une cible est détectée. On limite ainsi le nombre d'opérations effectuées durant l'étape 24.

Comme il a été dit précédemment, le procédé selon l'invention est basé sur l'exploitation simultanée des signaux émis par la source sur des canaux différents et sur l'intégration cohérente des informations extraites des signaux issus des différents canaux. Grâce à l'exploitation simultanée associée aux différents traitements mis en oeuvre, en particulier l'intégration cohérente, le procédé selon l'invention a pour avantage d'augmenter le contraste entre cibles ou entre cible et fouillis.

L'analyse de la fonction d'ambiguïté d'une émission de radio FM montre en effet que les lobes secondaires du signal ont un niveau égal au niveau du lobe principal multiplié par le facteur 1/TB, T étant la durée d'observation du signal et B la bande du signal émis.

En fonction du nombre m de canaux exploités, une exploitation multi-canaux telle que celle mise en oeuvre par l'invention, procurera une amélioration du contraste lobe principal / lobes secondaires dans un rapport égal au rapport des bandes exploitées (bande équivalente multicanaux / bande monocanal ). Ainsi, en considérant un rapport égal à 100, on gagne 20 dB sur le contraste.

Avantageusement le procédé selon l'invention permet également d'améliorer la résolution en distance par rapport à celle obtenue lorsqu'on n'exploite qu'un seul canal émis par la source émettrice. On rappelle, à ce propos, que le pouvoir séparateur en distance est la faculté de détecter deux cibles proches l'une de l'autre, dont les échos reçus ont la même intensité. On montre par ailleurs, que le pouvoir séparateur est, de manière générale, donné par le rapport $\dfrac{c}{B}$ dans lequel B est l'écart en fréquence entre les canaux extrêmes constituant l'ensemble des canaux exploités.

Ainsi, pour deux émissions séparées de 20 MHz, on peut attendre une résolution en distance de 15m.

Le procédé selon l'invention présente également l'avantage de permettre la mise en oeuvre de l'étape de levée d'ambiguïté par un processus de sélection de canaux.

**Revendications**

1. Procédé de détection en mode bistatique exploitant des émissions radio électriques non coopérantes émise sur des canaux distincts, ledit procédé comportant au moins:

   - une étape de réception (21) pour chaque canal exploité du signal de référence provenant de la source émettrice selon un trajet direct, et du signal rétrodiffusé par les différents objets présents dans l'espace couvert,
   - une étape de filtrage (22) permettant la séparation et la sélection des canaux fréquentiel exploités,
   - une étape d'analyse (23) canal par canal du signal reçu dans chaque canal qui permet de définir un ensemble de cellules d'analyse (31), chaque cellule correspondant à un domaine distance bistatique - vitesse doppler, $(\Delta d, \Delta v_d)$, autour d'un point défini par couple de valeurs (distance bistatique, vitesse doppler) donné, cellule à laquelle est associée la mesure du signal reçu pour cette cellule,
   - une étape d'intégration cohérente (24) du signal reçu, cette intégration étant réalisée de canal à canal pour chacune des cellules définies,
   - une étape de détection de cibles (25) par comparaison à un seuil du niveau de signal reçu pour chaque cellule (31) ;

   **caractérisé en ce qu'**il comporte en outre une étape complémentaire (26) de gestion des ambiguïtés distance induites par les pics secondaires affectant la représentation en distance du signal reçu dans chaque cellule (31), ladite étape de gestion d'ambiguïtés consistant à choisir plusieurs combinaisons de n canaux parmi lesdits canaux distincts et à appliquer ladite étape d'intégration cohérente (24) à ces combinaisons.

2. Procédé selon la revendication 1, dans lequel l'étape d'analyse (23) est mise en oeuvre au moyen d'une opération de corrélation distance - doppler du signal reçu avec des copies du signal de référence correspondant affectées de décalages temporels ($\tau$) et fréquentiels (f).

3. Procédé selon l'une des revendications 1 ou 2, dans lequel l'étape d'intégration cohérente (24) met en oeuvre une opération de filtrage définie par la relation suivante:

$$X_l = \frac{1}{m}\sum_{i=1}^{m}\chi_{i,\theta}(\tau, v_d) \cdot e^{j2\pi\frac{f_i}{F_s}\cdot\frac{1}{m}} + \varphi_i$$

où $f_i$ représente la fréquence du canal i considéré, $F_s$ la fréquence d'échantillonnage du signal reçu et $v_d$ la vitesse doppler de la cible.

4. Procédé selon l'une quelconque des revendications précédentes, dans lequel l'étape de détection (25) est réalisée, pour chaque cellule (31), après l'étape d'intégration cohérente (24).

5. Procédé selon l'une quelconque des revendications 1 à 3, dans lequel l'étape de détection (25) est réalisée, pour chaque cellule (31) de chaque canal, avant l'étape d'intégration (24), les étapes d'intégration (25) et de gestion des ambiguïtés (26) étant alors mise en oeuvre seulement sur les cellules pour lesquelles une cible a été détectée.

**Patentansprüche**

1. Verfahren zum Erkennen im bistatischen Modus unter Nutzung von nicht kooperierenden radioelektrischen Sendungen, die auf separaten Kanälen ausgestrahlt werden, wobei das Verfahren wenigstens Folgendes beinhaltet:

   - einen Schritt des Empfangens (21), für jeden benutzten Kanal, des Referenzsignals von der Sendequelle über einen direkten Weg und des von den in dem abgedeckten Raum vorhandenen verschiedenen Objekten zurückgestreuten Signals,
   - einen Schritt des Filterns (22), der es zulässt, die benutzten Frequenzkanäle zu trennen und auszuwählen,
   - einen Schritt des Analysierens (23), Kanal für Kanal, des in jedem Kanal empfangenen Signals, der es zulässt, einen Satz von Analysezellen (31) zu definieren, wobei jede Zelle einer Domäne bistatische Distanz - Dopplergeschwindigkeit ($\Delta d$, $\Delta v_d$) entspricht, um einen Punkt, der von einem Wertepaar (bistatische Distanz, Dopplergeschwindigkeit) definiert wird, wobei mit der Zelle der Messwert des für diese Zelle empfangenen Signals assoziiert ist,
   - einen Schritt des kohärenten Integrierens (24) des empfangenen Signals, wobei diese Integration Kanal für Kanal für jede der definierten Zellen realisiert wird,
   - einen Schritt des Erkennens von Zielen (25) durch Vergleichen des für jede Zelle (31) empfangenen Signalpegels mit einer Schwelle;

   **dadurch gekennzeichnet, dass** es ferner einen ergänzenden Schritt (26) des Verwaltens von durch die sekundären Spitzen eingeführten Distanzambiguitäten beinhaltet, die die Distanzdarstellung des empfangenen Signals in jeder Zelle (31) beeinflussen, wobei der Schritt des Verwaltens von Ambiguitäten darin besteht, mehrere Kombinationen von n Kanälen aus den separaten Kanälen auszuwählen und diesen kohärenten Integrationsschritt (24) auf diese Kombinationen anzuwenden.

2. Verfahren nach Anspruch 1, wobei der Analyseschritt (23) mittels eines Vorgangs des Doppler-Distanz-Korrelierens des empfangenen Signals mit Kopien des entsprechenden Referenzsignals umgesetzt wird, beeinflusst durch Zeit- ($\tau$) und Frequenz- (f) Verschiebungen.

3. Verfahren nach Anspruch 1 oder 2, wobei der kohärente Integrationsschritt (24) einen durch die folgende Relation definierten Filtervorgang umsetzt:

$$X_l = \frac{1}{m}\sum_{i=1}^{m}\chi_{i,\theta}(\tau, v_d) \cdot e^{j2\pi\frac{f_i}{F_s}\cdot\frac{1}{m}} + \varphi_i$$

   wobei $f_i$ die Frequenz des betrachteten Kanals i repräsentiert, $F_s$ die Abtastfrequenz des empfangenen Signals ist und $v_d$ die Dopplergeschwindigkeit des Ziels ist.

4. Verfahren nach einem der vorherigen Ansprüche, bei dem der Erkennungsschritt (25) für jede Zelle (31) nach dem kohärenten Integrationsschritt (24) realisiert wird.

5. Verfahren nach einem der Ansprüche 1 bis 3, bei dem der Erkennungsschritt (25) für jede Zelle (31) jedes Kanals vor dem Integrationsschritt (24) realisiert wird, wobei die Schritte des Integrierens (25) und des Verwaltens von Ambiguitäten (26) somit nur an den Zellen durchgeführt werden, für die ein Ziel erkannt wurde.

**Claims**

1. A method for bistatic mode detection using non-cooperating radioelectric transmissions transmitted on distinct channels, said method comprising at least:

   - a step (21) of receiving, for each channel that is used, the reference signal originating from the source transmitting along a direct path and the signal backscattered by the various objects present in the area covered;
   - a step (22) of filtering that allows the splitting and the selection of the frequency channels that are used;
   - a step (23) of channel-by-channel analysing of the signal received in each channel, which allows a set of analysis cells (31) to be defined, each cell corresponding to a bistatic distance - Doppler speed domain ($\Delta$d, $\Delta v_d$) about a point that is defined by a given pair of values (bistatic distance, Doppler speed), with the cell being associated with the measurement of the signal received for this cell;
- a step (24) of coherently integrating the received signal, said integration being carried out on a channel-by-channel basis for each of the defined cells;
- a step (25) of detecting targets by comparing the level of the signal received for each target cell (31) with a threshold,

**characterised in that** it further comprises an additional step (26) of managing distance ambiguities induced by the secondary peaks affecting the distance representation of the signal received in each cell (31), said step of managing ambiguities involving selecting a plurality of combinations of n channels from said distinct channels and applying said coherent integration step (24) to these combinations.

2. The method according to claim 1, wherein said analysis step (23) is implemented by means of an operation of distance - Doppler correlation of the received signal with copies of the corresponding reference signal affected by temporal ($\tau$) and frequency (f) shifts.

3. The method according to any one of claims 1 to 2, wherein said coherent integration step (24) implements a filtering operation that is defined by the following relation:

$$X_1 = \frac{1}{m}\sum_{i=1}^{m}\chi_{i,\theta}(\tau, v_d) \cdot e^{j2\pi\frac{f_i}{F_s}\cdot\frac{1}{m}} + \varphi_i$$

where $f_i$ represents the frequency of the considered channel i, $F_s$ represents the sampling frequency of the received signal and $V_d$ represents the Doppler speed of the target.

4. The method according to any one of the preceding claims, wherein said detection step (25) is carried out, for each cell (31), after said coherent integration step (24).

5. The method according to any one of claims 1 to 3, wherein said detection step (25) is carried out, for each cell (31) of each channel, before said integration step (24), with said integration (25) and ambiguity management (26) steps then being implemented only on the cells for which a target has been detected.

FIG.1

FIG.3

FIG.2

FIG.4

FIG.5

EP 1 851 568 B1

B

Canal 1
Canal 2

13

Canal m

Récepteur
Multi-voies — 21

Filtrage et
sélection des
canaux — 22

m

| Focalisation angulaire | Focalisation angulaire | Focalisation angulaire | Focalisation angulaire |

Corrélation
Distance – Doppler
Canal 1

Corrélation
Distance – Doppler
Canal 2

Corrélation
Distance – Doppler
Canal i — 23

Corrélation
Distance – Doppler
Canal m

Détection

Détection

Détection — 25

Détection

Intégration Cohérente

— 24

Gestion des
ambiguïtés distance — 26

FIG.6

**RÉFÉRENCES CITÉES DANS LA DESCRIPTION**

**Documents brevets cités dans la description**

- FR 2776438